# EUROPEAN PATENT APPLICATION

(11) **EP 2 083 576 A1**
(43) Date of publication of application: **29.07.2009**
(21) Application number: 06823421.0
(22) Date of filing: 15.11.2006
(51) Int. Cl.: H04Q 7/22, H04Q 7/38

(54) **COMMUNICATION TERMINAL APPARATUS, COMMUNICATION SYSTEM AND SEAMLESS HANDOVER METHOD**

(71) Applicant: Panasonic Corporation, Kadoma-shi Osaka 571-8501 (JP)
(72) Inventor: IWAMA, Tomohiro, Osaka 540-6207 (JP)
(74) Representative: Grünecker, Kinkeldey, Stockmair & Schwanhäusser Anwaltssozietät
(86) International application number: PCT/JP2006/322773
(87) International publication number: WO 2008/059570

(57) **Abstract**

A communication terminal apparatus, a communication system and a seamless handover method wherein even when a seamless handover occurs during implementation of a call control protocol, the call control protocol as to a call origination or reception can be continued. The communication terminal apparatus (200) has a call status mapping table (230) for mapping the messages of a call status protocol stack of a first radio I/F part (211) to the messages of a call status protocol stack of a second radio I/F part (212). When a call control protocol used in the first radio I/F part (211) notifies, to a call control protocol used in the second radio I/F part (212), a message of "INVITE has been transmitted", the call control protocol of the second radio I/F part (212) refers to the call status mapping table (230) to acquire a message of "Setup has been transmitted" mapped to the message of "INVITE has been transmitted", then changes the state to the message of "Setup has been transmitted" and then implements the following processes.

## Description

### Technical Field

The present invention relates to a communication terminal apparatus, a communication system and a seamless handover method for performing seamless handover between radio mobile communication networks adopting different call control protocols.

### Background Art

In recent years, a 3G/WLAN inter-working technique is becoming a focus of attention as a transitory technique leading to a fourth-generation mobile communication system, which merges the current third-generation (3G) mobile communication system and wireless local area network (WLAN) to provide users with a far-reaching communication area of the 3G system and wideband access of the WLAN system. Non-Patent Document 1 or the like proposes a seamless handover technique that allows a user to move without having to worry about different radio access schemes between 3G and WLAN. Non-Patent Document 1 shows a method of managing transfers between different types of networks of a 3G network and WLAN network using mobile IPs.

Furthermore, Non-Patent Document 2 describes a seamless hand over scheme for seamlessly switching between speech conversations of a channel switching call and a packet switching call.

When handover takes place between different networks, it is necessary to exchange information about the communication terminal apparatus that performs handover (hereinafter "management control information") between the networks, including Qos (Quality of service) information in the network before handover, throughput-related information such as the bit rate in the network before handover, information about the authentication in the network before handover and IP address information used before handover.

For example, Patent Document 1 discloses a method of maintaining a session, in which session parameters (band, codec, etc.) are exchanged between interfaces to maintain the session when handover takes place between different types of networks.

Conventional handover that takes place between different types of networks, will be explained.

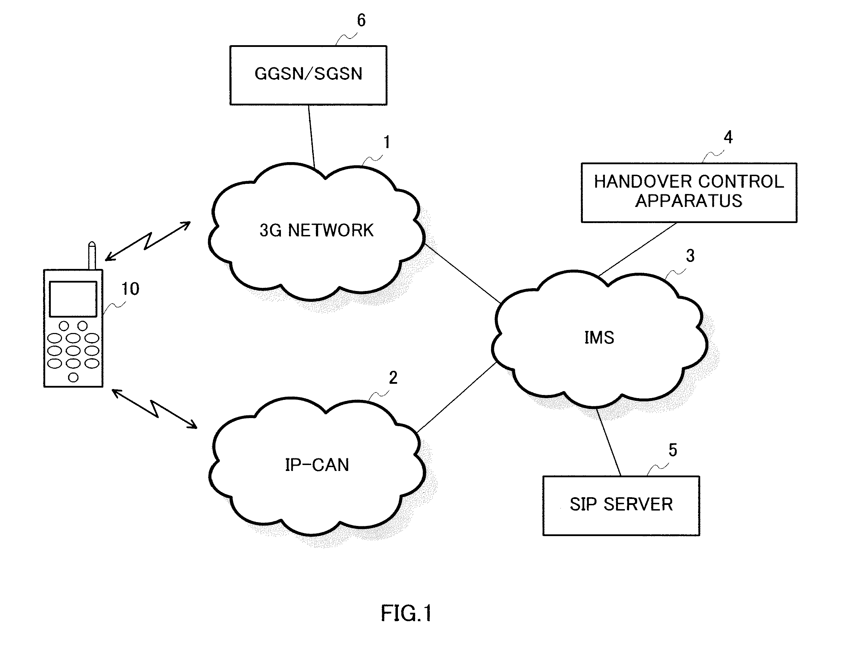

FIG.1 shows a configuration of a conventional communication system using different types of networks.

In FIG.1, a 3G network communication system is configured including 3G network 1, IP-CAN 2, IMS (IP Multimedia Sub-System) 3, handover control apparatus 4, radio mobile terminal 10, SIP (Session Initiation Protocol) server 5, and GGSN/SGSN (Gateway GPRS Support System/Serving GPRS Support System) 6.

3G network 1 is a cellular mobile communication network. IP-CAN 2 is a network that can carry out communication using IP packets. IMS 3 is a system for implementing IP multimedia communication on a cellular mobile communication network. Handover control apparatus 4 is set up on IMS 3 and controls seamless handover between different types of networks. Radio mobile terminal 10 is a mobile terminal that can carry out communication via 3G network 1 and IP-CAN 2. SIP server 5 is set up on IMS 3 and is an SIP call control server on the IP network. GGSN/SGSN 6 is a call control server and signaling gateway on 3G network 110.

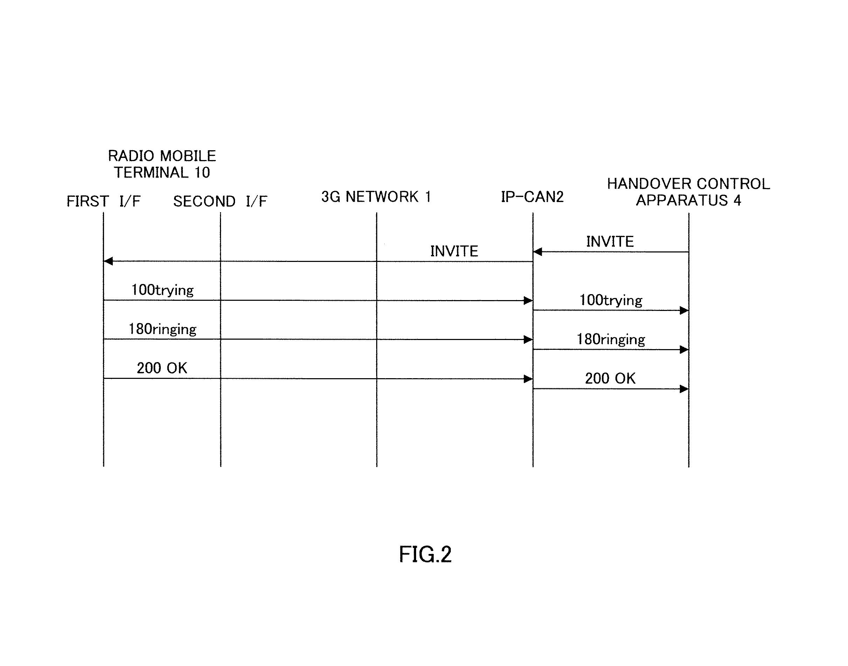

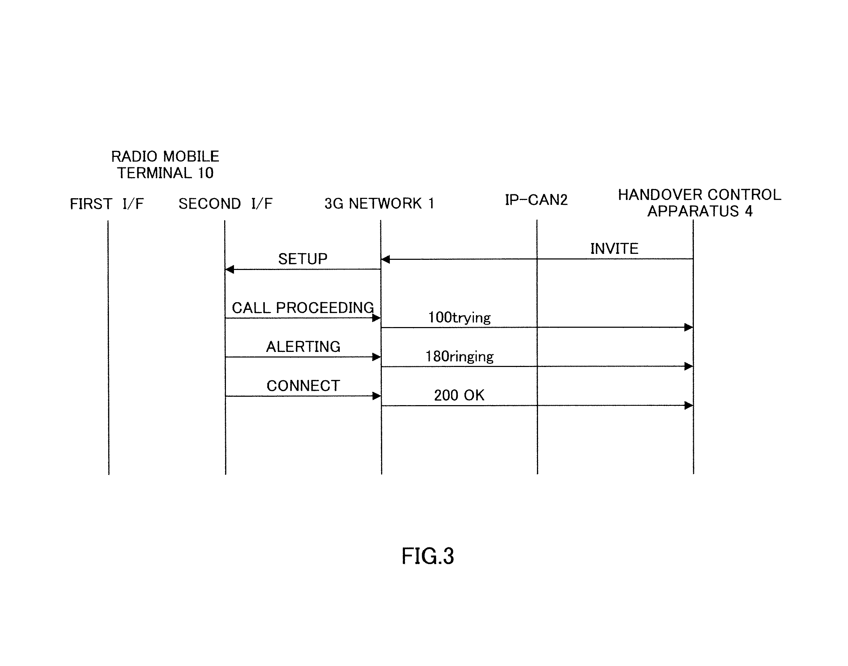

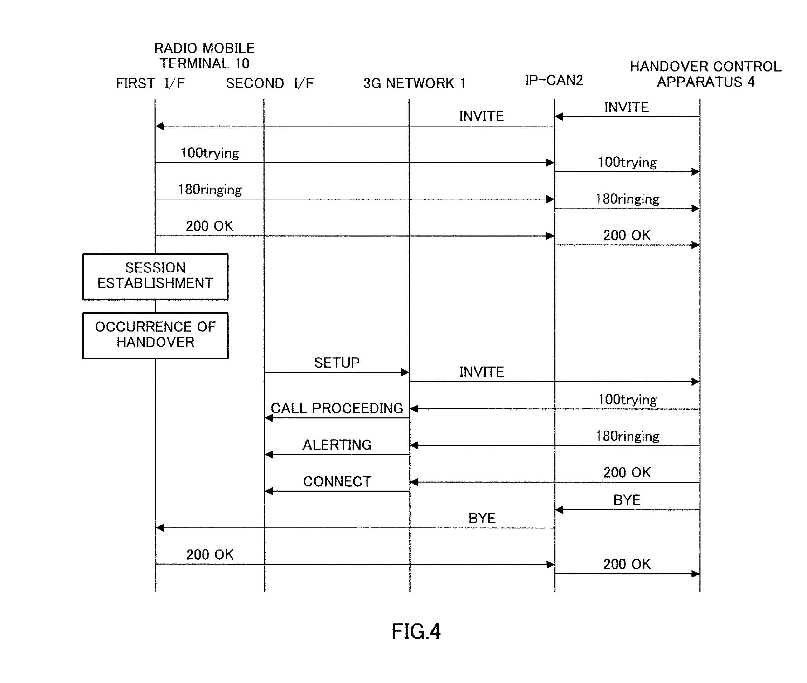

FIG.2 and FIG.3 show a sequence of receiving a call using the first and second radio interfaces, FIG.2 shows a call receiving sequence using the first radio interface and FIG.3 shows a call receiving sequence using the second radio interface. Furthermore, FIG.4 shows a handover sequence when seamless handover is performed using the existing 3GPP TR23.806 scheme.

As shown in FIG.2, in the SIP call receiving sequence using the existing first radio interface (e.g., WLAN), "INVITE" is transmitted from handover control apparatus 4 via IP-CAN 2, and the first radio interface transmits "100 trying," "180 ringing" and "200 OK."

On the other hand, as shown in FIG.3, in a call receiving sequence of 3GPP using the existing second radio interface, "INVITE" is transmitted from handover control apparatus 4 via 3G network 1, and 3G network 1 receives "INVITE" and transmits "Setup" to the second radio interface. The second radio interface returns "Call Proceeding," "Alerting" and "Connect" to 3G network 1, and 3G network 1 converts them to "100 trying," "180 ringing" and "200 OK" and transmits the converted signals.

In the 3GPP standardization, the existing call control shown in FIG.2 and FIG.3 is kept unchanged as much as possible. Thus, as shown in FIG. 4, the first radio interface (e.g., WLAN) normally receives a call (same as FIG.2). When a session is established and seamless handover takes place, it is possible to establish a session on the 3GPP side using the normal 3GPP call control (same as FIG.3) and then "BYE" the WLAN side.
That is, a normal connection is realized seen from each interface by linking the 3GPP side and the WLAN side instantaneously and then disconnecting one (here, the WLAN side).
Non-Patent Document 1: Apostolis K. Salkintzis, Chad Fors and Rajesh Pazhyannur, "WLAN-GPRS integration for next-generation mobile data networks", IEEE Wireless Communications, vol.9, no.5 October 2002, pp.112-124
Non-Patent Document 2: 3GPP TR23.806 V7.0.0 Voice Call Continuity between CS and IMS Study (Release7)
Patent Document 1: Japanese Patent Application Laid-Open No.2004-265154

### Disclosure of Invention

### Problems to be Solved by the Invention

However, a conventional seamless handover technique involving different types of networks focuses upon continuing a seamless handover session that takes place after a session is established and does not support seamless handover that takes place during call control. That is, Patent Document 1 describes a technique directed to maintaining a session under the same protocol and continuing a session of different session parameters such as the band to use and codec, and gives no description about seamless handover that takes place during call control.

On the other hand, Non-Patent Document 1 describes a method of continuing a seamless session between a cellular network and an IMS network, but this is a method of seamless handover (see FIG.4) after a session is established and is not applicable to seamless handover that takes place during call control.

Generally, when a transmission path condition in which a session is established deteriorates, seamless handover is performed to another transmission path. However, depending on the timing, seamless handover needs to be performed during call control trying to establish a session. However, since the existing method is not applicable to seamless handover during call control, there is a high possibility that it takes to establish a session or session itself is not established.

The present invention is made in view of the foregoing, and it is therefore an object of the present invention to provide a communication terminal apparatus, a communication system and a seamless handover method capable of continuing a call control protocol for call transmission and reception in execution of seamless handover between radio mobile communication networks adopting different call control protocols even if seamless handover takes place in execution of a call control protocol such as call transmission and reception.

### Means for Solving the Problem

The communication terminal apparatus of the present invention supports a first radio interface and a second radio interface and carries out communication using different call control protocol stacks between the first and second radio interfaces, and, with this communication terminal apparatus, when handover is performed from the first radio interface to the second radio interface while call control using the first radio interface is in progress, a call state in a call control protocol stack being executed using the first radio interface is maintained by a call control protocol stack to be executed using the second radio interface.

The communication terminal apparatus of the present invention supports a first radio interface and a second radio interface and carries out communication using different call control protocol stacks between the first and second radio interfaces, and, with this communication terminal apparatus, while call control using the first radio interface is in progress, even if the conditions to perform handover from the first radio interface to the second radio interface are met, handover is not performed, and handover is performed from the first radio interface to the second radio interface after the call control using the first interface is finished.

The communication system of the present invention has a plurality of different networks and a communication terminal apparatus comprising radio interfaces for carrying out communication with the plurality of networks, the communication terminal apparatus starting the radio interfaces to perform call control, and furthermore this communication system has: a call state mapping table that performs mapping by associating a message in a call state protocol stack of the communication terminal apparatus with a message in a call state protocol stack used in a certain network among the plurality of networks; and a call control section that looks up the call state mapping table, finds another predetermined message mapped by the predetermined message, changes the state to the another predetermined message and executes subsequent processing.

The method of seamless handover of the present invention allows a communication terminal apparatus supporting a first radio interface and a second radio interface and carrying out communication using different call control protocol stacks between the first and second radio interfaces, to perform handover from the first radio interface and the second radio interface, and, with this seamless handover method, when handover is performed from the first radio interface to the second radio interface while call control using the first radio interface is in progress, a call state in a call control protocol stack being executed using the first radio interface is maintained by a call control protocol stack to be executed using the second radio interface.

The method of seamless handover of the present invention allows a communication terminal apparatus supporting a first radio interface and a second radio interface and carrying out communication using different call control protocol stacks between the first and second radio interfaces, to perform handover from the first radio interface and the second radio interface, and, with this seamless handover method, while call control using the first radio interface is in progress, even if the conditions to perform handover from the first radio interface to the second radio interface are met, handover is not performed, and handover is performed from the first radio interface to the second radio interface after the call control using the first interface is finished.

### Advantageous Effect of the Invention

Upon seamless handover between mobile communication networks adopting different call control protocols, the present invention makes it possible to perform seamless handover and establish or continue a session even when seamless handover takes place during call control.

Furthermore, since seamless handover can be realized without waiting for a normal session to be established, the time for connection can be reduced.

Furthermore, it is possible to support even seamless handover that takes place during a call control sequence such as hold after a session is established.

### Brief Description of Drawings

FIG.1 shows a configuration of a conventional communication system using different types of networks;
FIG.2 is a call receiving sequence diagram using a first radio interface of the conventional communication system;
FIG.3 is a call receiving sequence diagram using a second radio interface of the conventional communication system;
FIG.4 shows a handover sequence when performing seamless handover using the existing 3GPP TR23.806 scheme;
FIG.5 is a block diagram showing a schematic configuration of a communication system according to Embodiment 1 of the present invention;
FIG.6 is a block diagram showing the functions of the radio mobile terminal of the communication system according to the above embodiment;
FIG.7 is a block diagram showing the functions of the 3G network of the communication system according to the above embodiment;
FIG.8 is a block diagram showing the functions of the IP-CAN of the communication system according to the above embodiment;
FIG.9 is a block diagram showing the functions of the handover control apparatus of the communication system according to the above embodiment;
FIG.10 shows a mapping table of call states of the first radio I/F section and the second radio I/F section of the radio mobile terminal of the communication system according to the above embodiment;
FIG.11 shows a mapping table of call states of the radio mobile terminal and the 3G network of the communication system according to the above embodiment;
FIG.12 shows a mapping table of call states of the radio mobile terminal and IP-CAN of the communication system according to the above embodiment;
FIG.13 is a sequence diagram of seamless handover when seamless handover takes place during outgoing call control at the first radio I/F section of the communication system according to the above embodiment;
FIG.14 is a sequence diagram when seamless handover takes place immediately after "100 trying" of the communication system is received, according to the above embodiment;
FIG.15 is a sequence diagram when seamless handover takes place immediately after "180 ringing" of the communication system is received, according to the above embodiment;
FIG.16 is a sequence diagram of seamless handover when seamless handover takes place during outgoing call control in the second radio I/F section of the communication system according to Embodiment 2 of the present invention;
FIG. 17 is a sequence diagram when seamless handover takes place immediately after "Call Proceeding" of the communication system is received, according to the above embodiment;
FIG.18 is a sequence diagram when seamless handover takes place immediately after "Alerting" of the communication system is received, according to the above embodiment;
FIG.19 is a sequence diagram of seamless handover when seamless handover takes place during incoming call control in the first radio I/F section of the communication system according to Embodiment 3 of the present invention;
FIG.20 shows an example of a handover report message of the communication system according to the above embodiment;
FIG.21 is a sequence diagram when seamless handover takes place immediately after "100 trying" of the communication system is transmitted, according to the above embodiment;
FIG.22 is a sequence diagram when seamless handover takes place immediately after "180 ringing" of the communication system is transmitted, according to the above embodiment;
FIG.23 is a sequence diagram of seamless handover during call reception in the communication system according to the above embodiment when handover is not reported;
FIG.24 is a sequence diagram of seamless handover when seamless handover takes place during incoming call control in the second radio I/F section of the communication system according to Embodiment 4 of the present invention;
FIG.25 is a sequence diagram when seamless handover takes place immediately after "Call Proceeding" of the communication system is transmitted, according to the above embodiment;
FIG.26 is a sequence diagram when seamless handover takes place immediately after "Alerting" of the communication system is transmitted, according to the above embodiment;
FIG.27 is a sequence diagram of seamless handover during call reception in the communication system according to the above embodiment when handover is not reported;
FIG.28 shows a sequence of seamless handover when seamless handover takes place during pending call control in the first radio I/F section of a communication system according to Embodiment 5 of the present invention;
FIG.29 shows details of the sequence of execution of seamless handover in FIG.28;
FIG.30 shows a sequence of seamless handover when seamless handover takes place during pending call control in the second radio I/F section of a communication system according to Embodiment 6 of the present invention; and
FIG.31 shows details of the sequence of execution of seamless handover in FIG.30.

### Best Mode for Carrying Out the Invention

Embodiments of the present invention will be explained in detail below with reference to the accompanying drawings.

### (Embodiment 1)

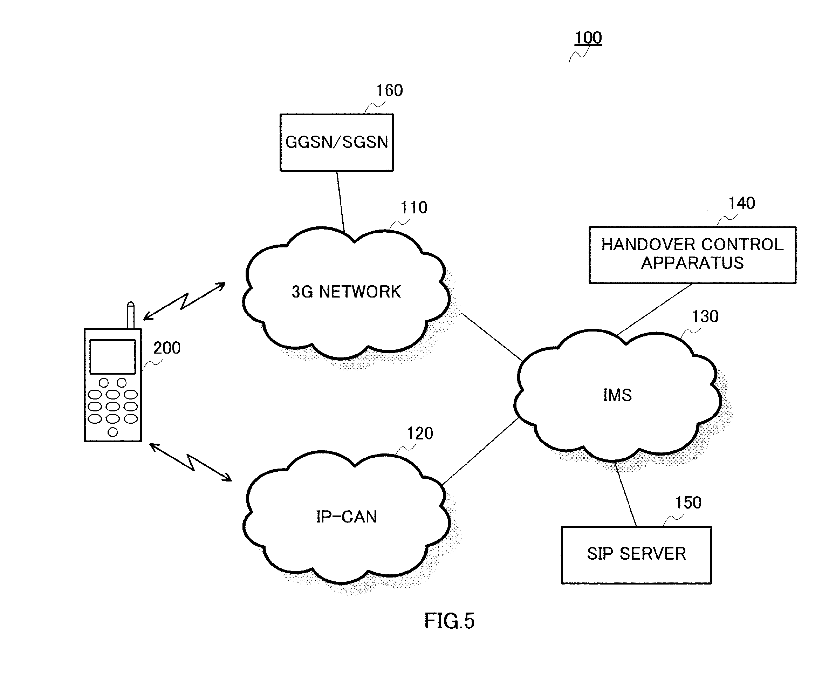

FIG.5 is a block diagram showing a schematic configuration of a communication system according to Embodiment 1 of the present invention. The present embodiment is an example where the present invention is applied to a 3G network communication system.

In FIG.5, communication system 100 is configured including 3G network 110, IP-CAN 120, IMS (IP Multimedia Sub-System) 130, handover control apparatus 140, radio mobile terminal 200, SIP (Session Initiation Protocol) server 150 and GGSN/SGSN (Gateway GPRS Support System/Serving GPRS Support System) 160.

3G network 110 is a cellular mobile communication network. 2G network may also be applicable.

IP-CAN 120 is a network that can carry out communication using IP packets.

IMS 130 is a system for implementing IP multimedia communication on a cellular mobile communication network.

Handover control apparatus 140 is set up on IMS 130 and controls seamless handover between different types of networks.

Radio mobile terminal 200 is a mobile terminal that can carry out communication via 3G network 110 and IP-CAN 120.

SIP server 150 is set up on IMS 130 and is an SIP call control server on the IP network.

GGSN/SGSN 160 is a call control server and signaling gateway of 3G network 110.

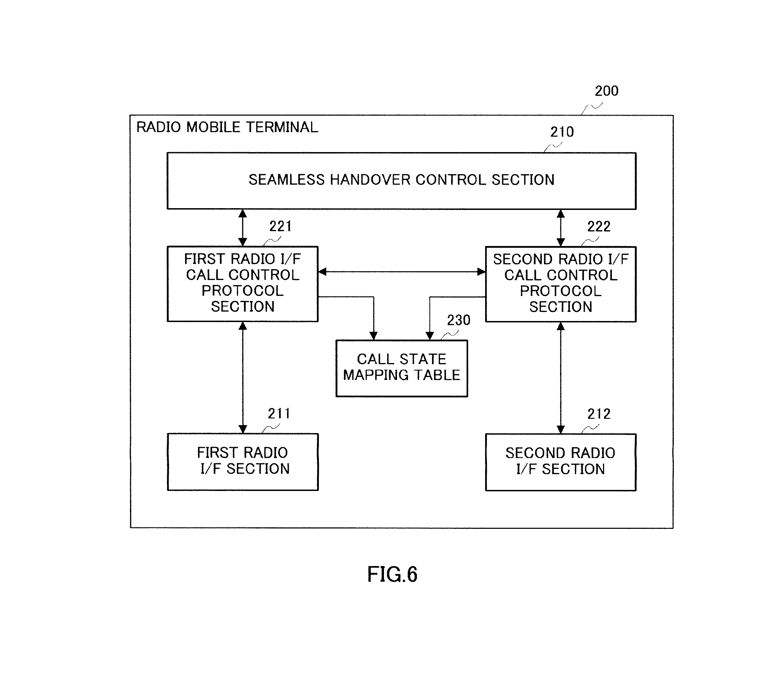

FIG.6 is a block diagram showing the functions of radio mobile terminal 200.

In FIG. 6, radio mobile terminal 200 is configured including seamless handover control section 210, first radio interface (I/F) section 211, second radio I/F section 212, first radio I/F call control protocol section 221, second radio I/F call control protocol section 222 and call state mapping table 230.

Seamless handover control section 210 triggers seamless handover. Furthermore, seamless handover control section 210 commands first radio I/F call control protocol section 221 and second radio I/F call control protocol section 222 to perform seamless handover, and transmits a handover report message to the handover control apparatus using first radio I/F section 211 or second radio I/F section 212.

First radio I/F section 211 transmits and receives data using the first radio interface. Second radio I/F section 212 transmits and receives data using the second radio interface.

First radio I/F call control protocol section 221 performs call control to transmit and receive data using the first radio interface. Furthermore, when seamless handover takes place, first radio I/F call control protocol section 221 reports the call state to second radio I/F call control protocol section 222. Upon receiving the call state from second radio I/F call control protocol section 222, first radio I/F call control protocol section 221 looks up call state mapping table 230, finds the call state to match first radio I/F call control protocol section 221, and transitions to that state.

Second radio I/F call control protocol section 222 performs call control to transmit and receive data using the second radio interface. Furthermore, when seamless handover takes place, second radio I/F call control protocol section 222 reports the call state to first radio I/F call control protocol section 221. Upon receiving the call state from first radio I/F call control protocol section 221, second radio I/F call control protocol section 222 looks up call state mapping table 230, finds the call state to match the second radio I/F call control protocol and transitions to that state.

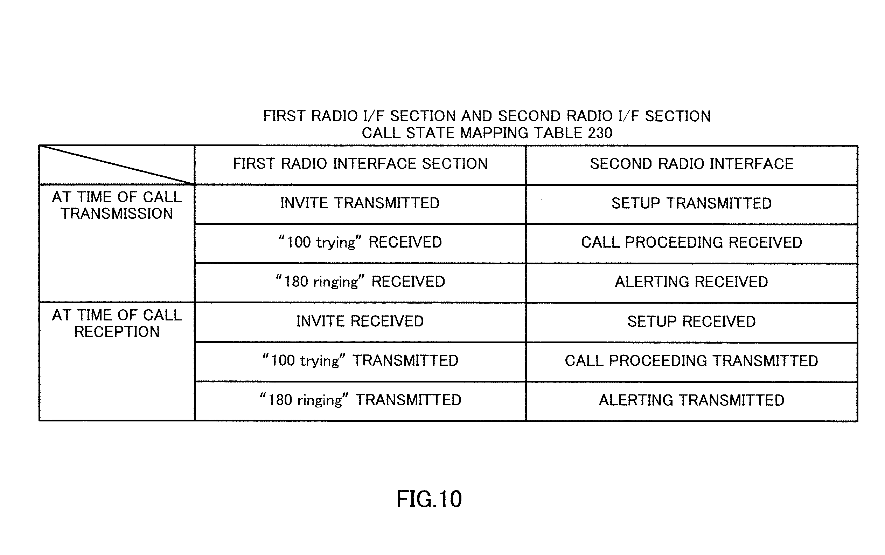

Call state mapping table 230 is a table that performs mapping by associating messages in the protocol stack for the call state of first radio I/F section 211 and messages in the protocol stack for the call state of second radio I/F section 212. For example, "INVITE transmitted" in the protocol stack for the call state of first radio I/F section 211 is mapped to "Setup transmitted" in the protocol stack for the call state of the second radio I/F section 212. Details of call state mapping table 230 will be described later using FIG.10.

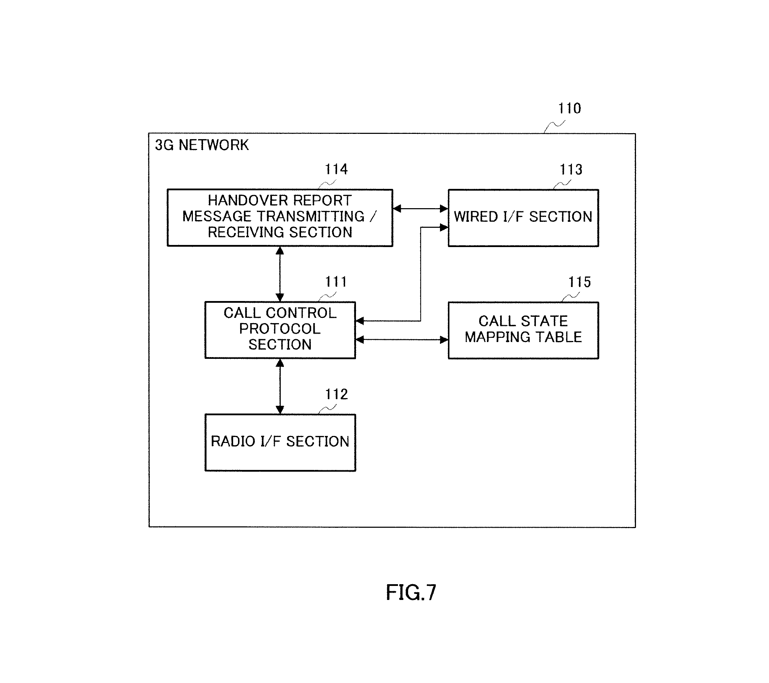

FIG.7 is a block diagram showing the functions of 3G network 110.

In FIG.7, 3G network 110 is configured including call control protocol section 111, radio I/F section 112, wired I/F section 113, handover report message transmitting/receiving section 114 and call state mapping table 115.

Call control protocol section 111 performs call control to transmit and receive data using radio I/F section 112. Furthermore, upon receiving a seamless handover report, call control protocol section 111 looks up call state mapping table 115, finds the call state corresponding to the call control protocol of 3G network 110 from the call state of the radio mobile terminal described in the handover report message, and transitions to that state.

Radio I/F section 112 carries out radio communication with second radio I/F section 212 of radio mobile terminal 200. Wired I/F section 113 transmits and receives data to and from handover control apparatus 140.

Handover report message transmitting/receiving section 114 transmits and receives a handover report message.

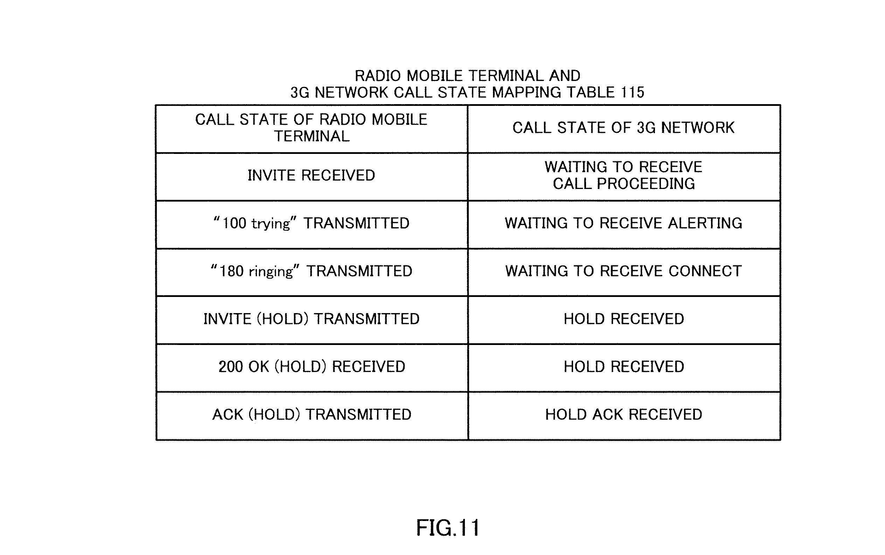

Call state mapping table 115 is a table that performs mapping by associating messages in the protocol stack for the call state of radio mobile terminal 200 with messages in the protocol stack for the call state of 3G network 110. Details of call state mapping table 115 will be described later using FIG.11.

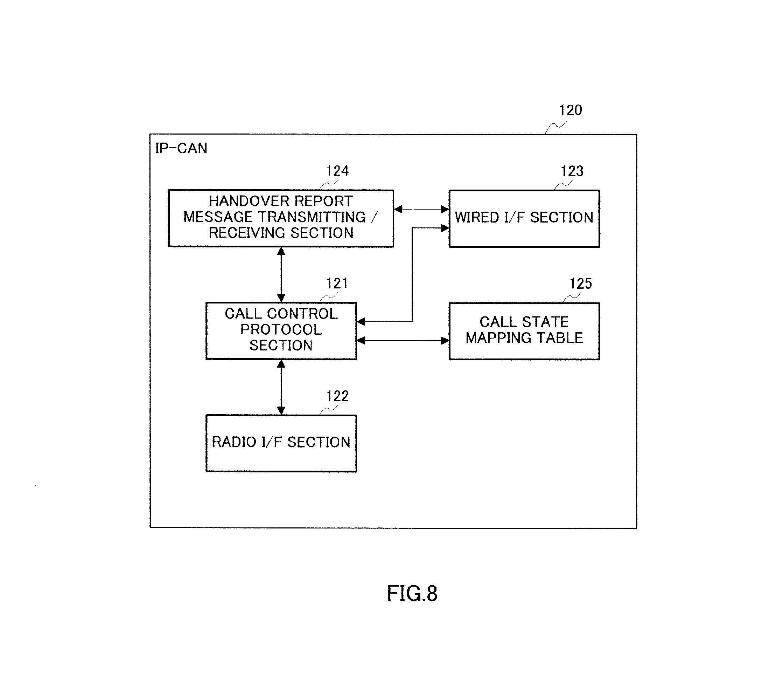

FIG.8 is a block diagram showing the functions of IP-CAN 120.

In FIG.8, IP-CAN 120 is configured including call control protocol section 121, radio I/F section 122, wired I/F section 123, handover report message transmitting/receiving section 124 and call state mapping table 125.

Call control protocol section 121 performs call control to transmit and receive data using radio I/F section 122. Furthermore, upon receiving a seamless handover report, call control protocol section 121 looks up call state mapping table 125, finds the call state corresponding to the call control protocol of IP-CAN 120 from the call state of the radio mobile terminal described in the handover report message, and transitions to that state.

Radio I/F section 122 carries out radio communication with first radio I/F section 211 of radio mobile terminal 200. Wired I/F section 123 transmits and receives data to and from handover control apparatus 140.

Handover report message transmitting/receiving section 124 transmits and receives a handover report message.

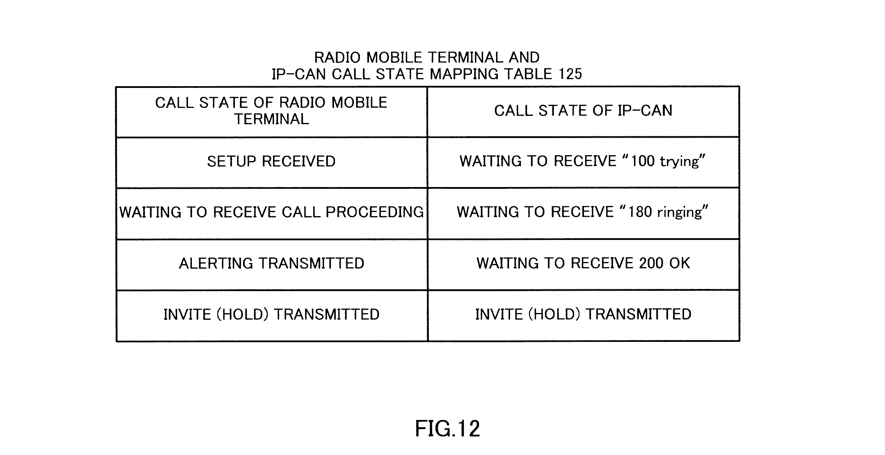

Call state mapping table 125 is a table that performs mapping by associating messages in the protocol stack for the call state of radio mobile terminal 200 with messages in the protocol stack for the call state of IP-CAN 120. The details of call state mapping table 125 will be described later using FIG.12.

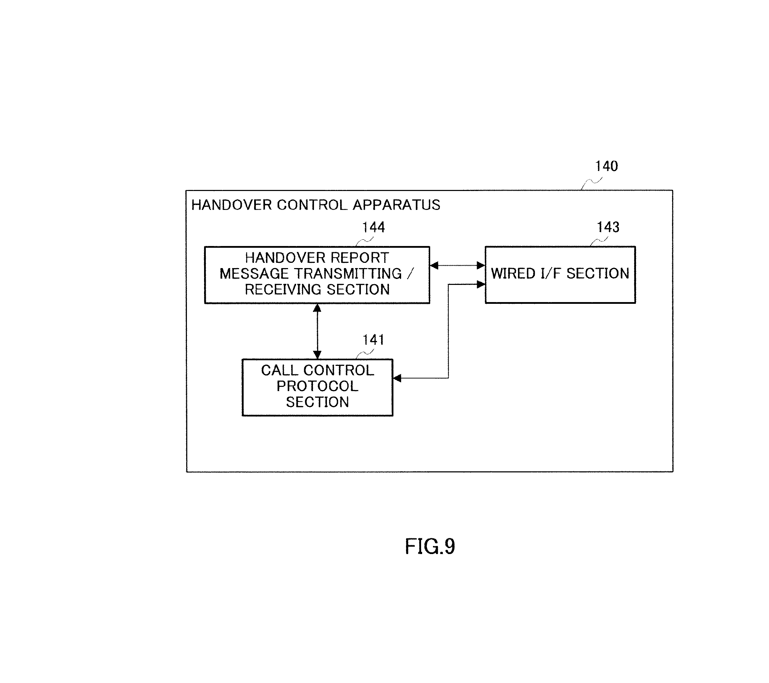

FIG.9 is a block diagram showing the functions of handover control apparatus 140.

In FIG.9, handover control apparatus 140 is configured including call control protocol section 141, wired I/F section 143 and handover report message transmitting/receiving section 144.

Call control protocol section 141 performs call control to perform seamless handover.

Wired I/F section 143 carries out data communication with 3G network 110 and IP-CAN 120.

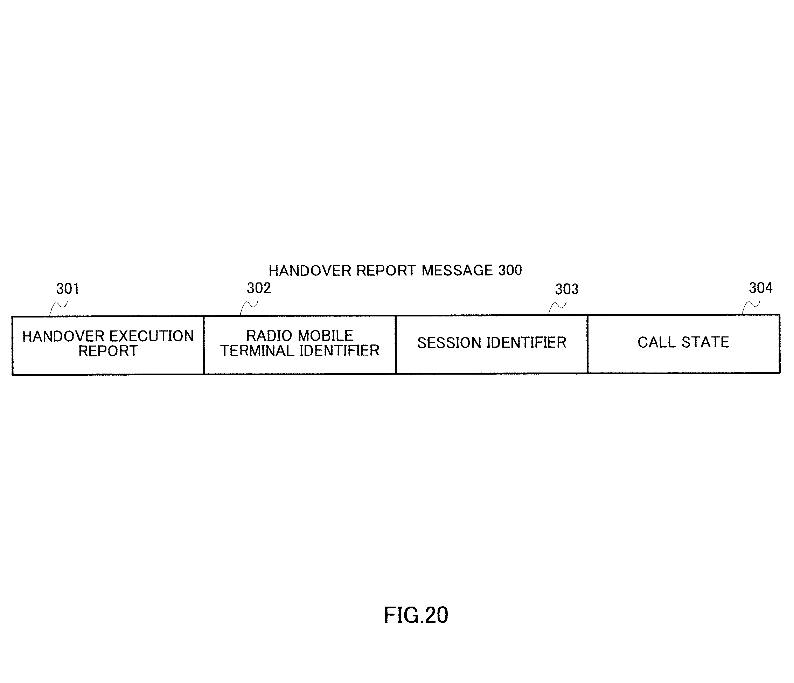

Handover report message transmitting/receiving section 144 transmits a handover report message received from 3G network 110 to IP-CAN 120 and also transmits handover report message 300 (see FIG.20) received from IP-CAN 120 to 3G network 110. Handover report message transmitting/receiving section 144 transmits a handover report message to 3G network 110. An example of above-described handover report message 300 will be described later using FIG.20.

FIG. 10 shows call state mapping table 230 of first radio I/F section 211 and second radio I/F section 212.

In FIG.10, when first radio I/F section 211 sends out a call, call state mapping table 230 of first radio I/F section 211 and second radio I/F section 212 maps "INVITE transmitted" for first radio I/F section 211 to "Setup transmitted" for second radio I/F section 212, "100 trying received" for first radio I/F section 211 to "Call Proceeding received" for second radio I/F section 212, and "180 ringing received" for first radio I/F section 211 to "Alerting received" for second radio I/F section 212. Furthermore, when first radio I/F section 211 receives a call, mapping table 230 maps "INVITE received" for first radio I/F section 211 to "Setup received" for second radio I/F section 212, "100 trying transmitted" for first radio I/F section 211 to "Call Proceeding transmitted" for second radio I/F section 212 and "180 ringing transmitted" for first radio I/F section 211 to "Alerting transmitted" for second radio I/F section 212.

For example, when the call control protocol used by first radio I/F section 211 reports an "INVITE transmitted" message to the call control protocol used by second radio I/F section 212, the call control protocol of second radio I/F section 212 looks up call state mapping table 230 and finds "Setup transmitted" to be mapped to "INVITE transmitted."

FIG.11 shows call state mapping table 115 of radio mobile terminal 200 and 3G network 110.

In FIG.11, call state mapping table 115 of radio mobile terminal 200 and 3G network 110 maps the call state "INVITE received" for radio mobile terminal 200 to "waiting to receive Call Proceeding" for 3G network 110, the call state "100 trying transmitted" for radio mobile terminal 200 to "waiting to receive Alerting" for 3G network 110, the call state "180 ringing transmitted" for radio mobile terminal 200 to "waiting to receive Connect" for 3G network 110, the call state "INVITE (hold) transmitted" for radio mobile terminal 200 to "Hold received" for 3G network 110, the call state "200 OK (hold) received" for radio mobile terminal200 to "Hold received" for 3G network 110, and the call state "Ack (hold) transmitted" for radio mobile terminal 200 to "Hold Ack received" for 3G network 110.

FIG.12 shows call state mapping table 125 of radio mobile terminal 200 and IP-CAN 120.

In FIG.12, call state mapping table 125 of radio mobile terminal 200 and IP-CAN 120 maps the call state "Setup received" for radio mobile terminal 200 to "waiting to receive 100 trying" for IP-CAN 120, the call state "Call Proceeding transmitted" for radio mobile terminal 200 to "waiting to receive 180 ringing" for IP-CAN 120, the call state "Alerting" transmitted" for radio mobile terminal 200 to "waiting to receive 200 OK" for IP-CAN 120, and the call state "INVITE (hold) transmitted" for radio mobile terminal 200 to "INVITE (hold) transmitted" for IP-CAN 120.

Operations of the communication system configured as described above will be explained.

Embodiment 1 is an example where seamless handover from first radio I/F section 211 (WLAN side) to second radio I/F section 212 (i.e. 3GPP side) takes place during outgoing call control.

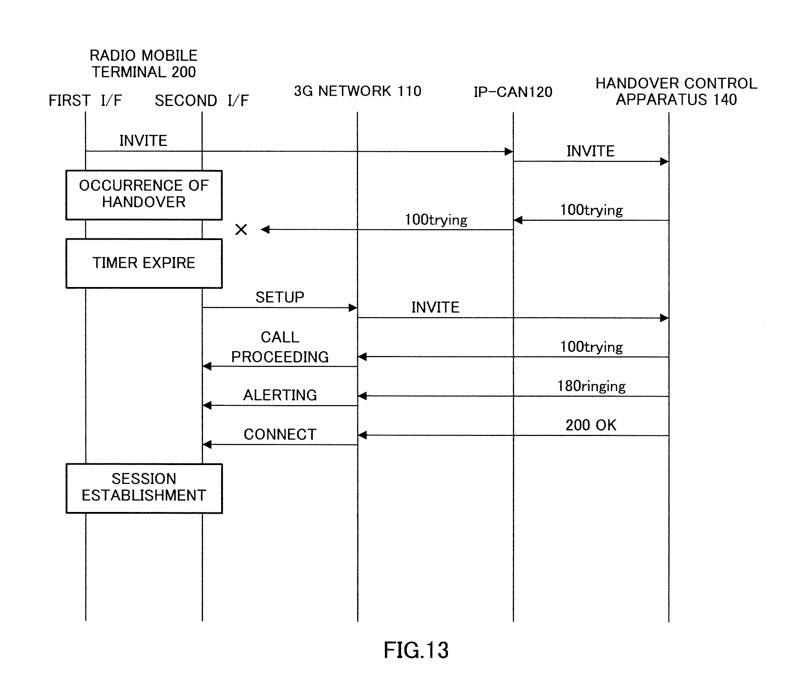

FIG.13 is a sequence diagram showing seamless handover during call transmission and shows a sequence diagram of seamless handover when seamless handover takes place during outgoing call control in first radio I/F section 211.

The present embodiment will assume that the call control protocol used by first radio I/F section 211 is SIP (Session Initiation Protocol) and the call control protocol used by second radio I/F section 212 is 3GPP.

Radio mobile terminal 200 transmits "INVITE" using first radio I/F section 211. In this case, the conditions to perform handover from first radio I/F section 211 to second radio I/F section 212 are met and handover is performed from first radio I/F section 211 to second radio I/F section 212.

To be more specific, radio mobile terminal 200 transmits "INVITE" as a call transmission message to handover control apparatus 140 via IP-CAN 120 using first radio I/F section 211. In response to "INVITE" transmitted via IP-CAN 120, handover control apparatus 140 transmits "100 trying" and before this "100 trying" arrives at first radio I/F section 211, first radio I/F section 211 produces seamless handover and switches the transmission path (see the symbol "×" in FIG.13).

The conditions to perform handover from first radio I/F section 211 to second radio I/F section 212 are met and handover is performed from first radio I/F section 211 to second radio I/F section 212.

In this case, the call control protocol used by first radio I/F section 211 reports a call state, here an INVITE transmitted state to the call control protocol used by second radio I/F section 212. That is, first radio I/F section 211 reports a "call state: INVITE transmitted" message to second radio I/F section 212.

The call control protocol of second radio I/F section 212 looks up call state mapping table 230 of first radio I/F section 211 and second radio I/F section 212 shown in FIG. 10, and finds "Setup transmitted" to be mapped to"INVITEtransmitted." Thus, the call control protocol of second radio I/F section 212 decides that the call state of radio mobile terminal 200 is "Setup transmitted" and changes the state to "Setup transmitted" and executes the subsequent processing.

In response to this, the call control protocol of second radio I/F section 212, which is in the "Setup transmitted" state, waits to receive "Call Proceeding" from second radio I/F section 212.

Duetotheabove-describedhandover, radiomobile terminal 200 cannot receive "100 trying" transmitted from IP-CAN 120 using first radio I/F section 211. Therefore, in second radio I/F section 212, the receiving timer for "Call Proceeding" expires, and radio mobile terminal 200 retransmits "Setup." Radio mobile terminal 200 then performs normal call control using second radio I/F section 212.

Thus, radio mobile terminal 200 can establish a session using second radio I/F section 212.

With regard to the occurrence of seamless handover during the aforementioned outgoing call control, the call state continuation operation by radio mobile terminal 200 will be explained in further detail. The following explanations partially overlap with the above explanations.

As shown in FIG.13, radio mobile terminal 200 transmits "INVITE" using first radio I/F section 211. In this case, the conditions to perform handover from first radio I/F section 211 to second radio I/F section 212 are met, and handover is performed from first radio I/F section 211 to second radio I/F section 212. Second radio I/F section 212 knows from an internal signal of radio mobile terminal 200 that a switch has taken place.

Handover control apparatus 140 transmits "100 trying" in response to the transmitted "INVITE" and before this "100 trying" arrives at first radio I/F section 211, first radio I/F section 211 produces handover and switches the transmission path. The operations so far are normal operations (similar operations to the conventional example). In the present embodiment, at the time of "occurrence of handover" shown in FIG.13, the following operations are newly performed inside radio mobile terminal 200. At the time of "occurrence of handover," the call control protocol used by first radio I/F section 211 transmits "Setup transmitted" by second radio I/F section 21 in the call state (here "INVITE transmitted" state) to the call control protocol used by second radio I/F section 212. That is, the call control protocol of second radio I/F section 212 looks up call state mapping table 230 of first radio I/F section 211 and second radio I/F section 212 shown in FIG.10 and finds "Setup transmitted" to be mapped to "INVITE transmitted."

Noting that the way the signaling states transition is the same and yet the messages differ from each other, the present invention allows the same state to be created on the receiving side according to that state only by reporting the state. However, since messages in the protocol stacks of first radio I/F section 211 and second radio I/F section 212 are different, call state mapping table 230 (FIG.10) is necessary.

With reference to call state mapping table 230, the call control protocol stack of second radio I/F section 212 (i.e. the 3GPP side) causes the state of the call control of radio mobile terminal 200 to transition to "Setup transmitted." The rest of the operations are normal operations of the call control protocol stack. When radio mobile terminal 200 is placed in the "Setup transmitted" state, radio mobile terminal 200 is set in a state waiting to receive the next "Call Proceeding." This is a normal operation. As a matter of fact, the next "Call Proceeding" will not arrive no matter how long radio mobile terminal 200 waits. This is because handover has already taken place and "100 trying" itself has been transmitted, but, since radio mobile terminal 200 has already switched the transmission path through the handover, only second radio I/F section 212 (i.e. 3GPP side) receives the data. From the standpoint of call control in second radio I/F section 212 (i.e. 3GPP side), "Call Proceeding" must really be returned after "Setup" is sent but does not come. Therefore, even if a timeout occurs as shown with "Timer Expire" in FIG.13, the present embodiment re-updates "Setup" again. The subsequent processing after sending this "Setup" follows completely the same sequence as in the call establishment using normal 3GPP (e.g., the seamless handover sequence in FIG.4).

An example has been explained so far where handover takes place immediately after "INVITE" is transmitted as the call state, but similar processing is also applicable to a case where handover takes place immediately after "100 trying" or "180 ringing" is sent. A sequence in a case where seamless handover takes place immediately after "100 trying" or "180 ringing" is received will be shown.

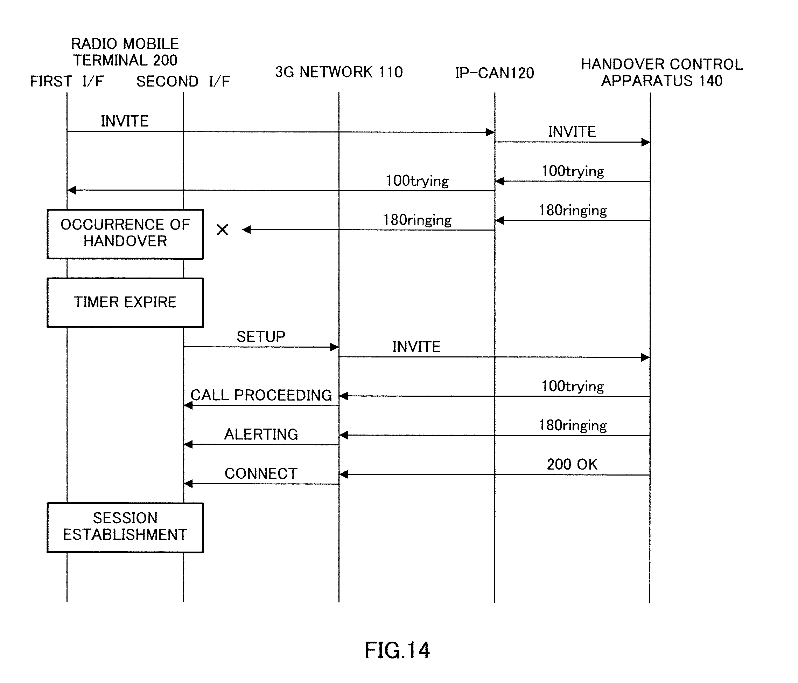

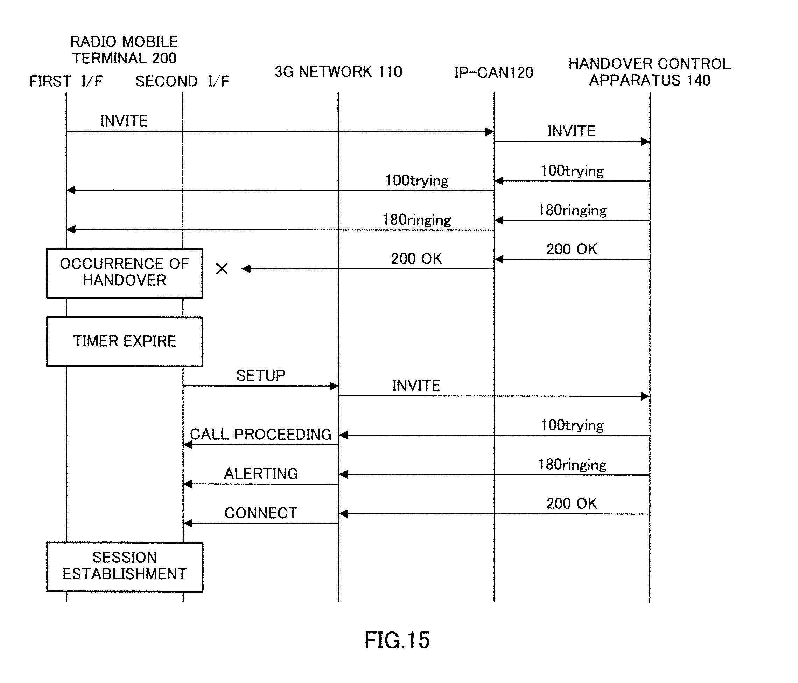

FIG.14 and FIG.15 show sequence diagrams when seamless handover takes place during call transmission, FIG.14 is a sequence diagram when seamless handover takes place immediately after "100 trying" is received and FIG. 15 is a sequence diagram when seamless handover takes place immediately after "180 ringing" is received.

For mapping between call control states, call state mapping table 230 of first radio I/F section 211 and second radio I/F section 212 shown in FIG.10 will be used.

As explained in detail above, communication terminal apparatus 200 of the present embodiment includes call state mapping table 230 that maps messages in the protocol stack for the call state of first radio I/F section 211 to messages in the protocol stack for the call state of second radio I/F section 212 and when the call control protocol used by first radio I/F section 211 reports "INVITE transmitted" to the call control protocol used by second radio I/F section 212, the call control protocol of second radio I/F section 212 looks up call state mapping table 230, finds "Setup transmitted" mapped by "INVITE transmitted," changes the state to the "Setup transmitted" message and executes the subsequent processing, and, therefore, even if seamless handover takes place between mobile communication networks adopting different call control protocols during call control, it is possible to perform seamless handover and establish or continue a session.

Furthermore, since seamless handover can be realized without waiting for a normal session to be established, the connection time can be reduced.

Furthermore, it is possible to even support cases where seamless handover takes place during a call control sequence such as hold after a session is established.

Thus, according to the present embodiment, it is possible to support seamless handover that takes place duringcallcontrol. Generally, when a transmission path in which a session is established deteriorates, seamless handover is performed to another transmission path. However, depending on the timing, there may be a case where the transmission path deteriorates while trying to establish a session and it is preferable to perform seamless handover to another transmission path. Conventionally, in this case, in the case of call transmission, the call is interrupted and the user must perform the call transmission operation. The present embodiment provides a unique advantage of preventing such call interruption as much as possible and starting a session in another transmission path even if seamless handover takes place during call transmission.

### (Embodiment 2)

Embodiment 2 is an example where seamless handover takes place from second radio I/F section 212 to first radio I/F section 211 during outgoing call control.

Hereinafter the hardware configuration and function blocks of respective sections of a communication system in each embodiment are similar to those in FIG.5 to FIG.9, and therefore explanations thereof will be omitted.

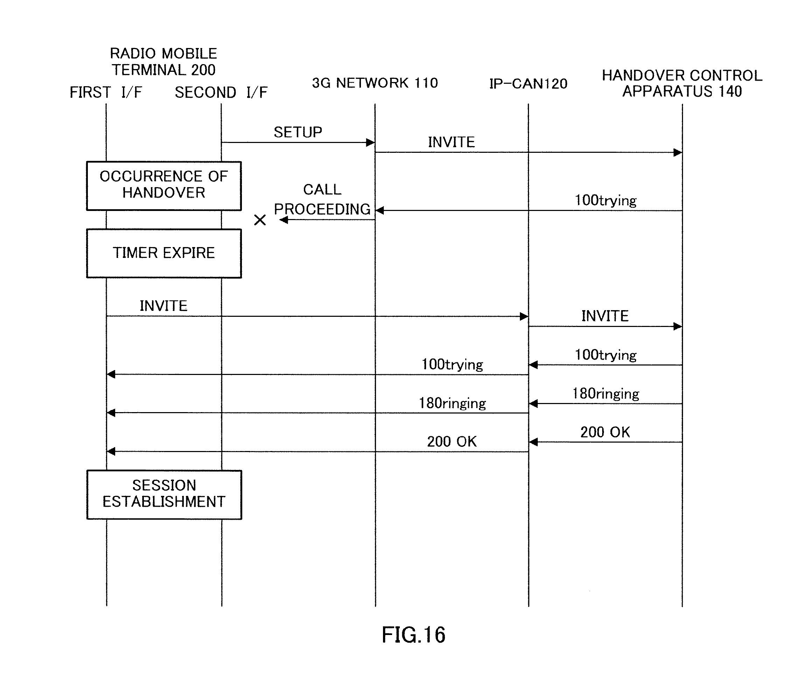

FIG.16 is a sequence diagram showing seamless handover during call transmission and shows a sequence diagram of seamless handover when seamless handover takes place during outgoing call control in second radio I/F section 212.

The present embodiment will assume that the call control protocol used by first radio I/F section 211 is SIP and the call control protocol used by second radio I/F section 212 is 3GPP.

Radio mobile terminal 1200 transmits "Setup" using second radio I/F section 212. In this case, the conditions to perform handover from second radio I/F section 212 to first radio I/F section 211 are met and handover is performed from second radio I/F section 212 to first radio I/F section 211.

In this case, the call control protocol used by second radio I/F section 212 reports the call state ("Setup transmitted" state here) to the call control protocol used by first radio I/F section 211. That is, second radio I/F section 212 reports a "call state: Setup transmitted" message to first radio I/F section 211.

Here, the call control protocol of first radio I/F section 211 looks up call state mapping table 230 of first radio I/F section 211 and second radio I/F section 212 shown in FIG.10 and finds "INVITE transmitted" to be mapped to "Setup transmitted. " This causes the call control protocol of first radio I/F section 211 to decide that the call state of radio mobile terminal 200 is "INVITE transmitted," changes the state to "INVITE transmitted" and performs subsequent processing.

In response to this, since the call control protocol of first radio I/F section 211 is in the "INVITE transmitted" state, the call control protocol waits to receive "100 trying" from first radio I/F section 211.

Duetotheabove-describedhandover, radiomobile terminal 200 cannot receive "Call Proceeding" transmitted from 3G network 110 using second radio I/F section 212. Therefore, the receiving timer for "100 trying" expires, and first radio I/F section 211 retransmits "INVITE." Then, normal call control is executed using first radio I/F section 211.

This allows a session to be established using first radio I/F section 211.

A case has been explained so far where seamless handover takes place immediately after "Setup" is transmitted, but the same applies even when seamless handover takes place immediately after "Call Proceeding" or "Alerting" is received.

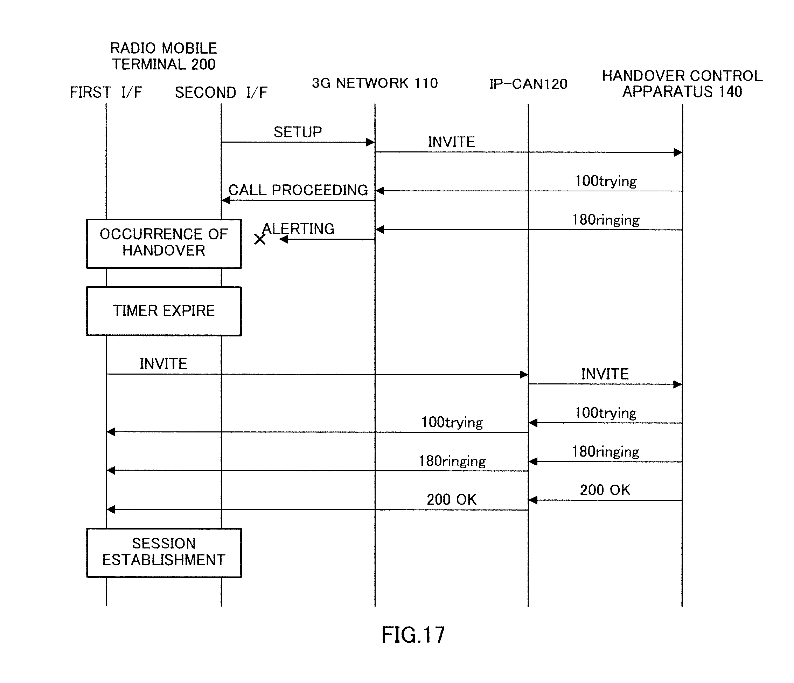

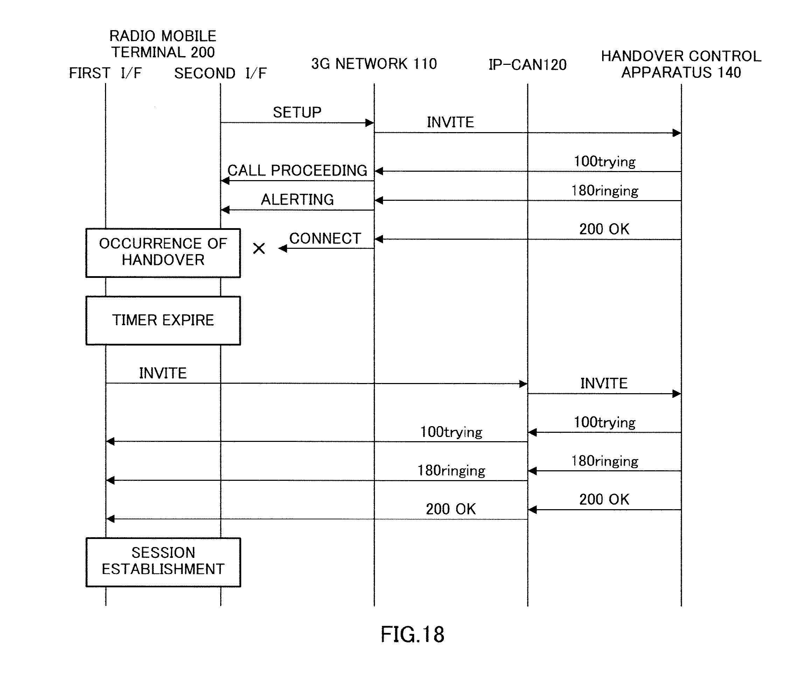

FIG.17 and FIG.18 are sequence diagrams when seamless handover takes place during call transmission, FIG. 17 is a sequence diagram when seamless handover takes place immediately after "Call Proceeding" is received and FIG. 18 shows a sequence diagram when seamless handover takes place immediately after "Alerting" is received.

For mapping between call control states, call state mapping table 230 of first radio I/F section 211 and second radio I/F section 212 shown in FIG.10 will be used.

Therefore, the present embodiment provides advantages similar to those in Embodiment 1, that is, it is possible to perform seamless handover between mobile communication networks adopting different call control protocols even when seamless handover takes place during call control and establish or continue a session.

### (Embodiment 3)

Embodiment 3 and Embodiment 4 are examples where seamless handover takes place during call reception, Embodiment 3 is an example where seamless handover takes place during incoming call control in first radio I/F section 211.

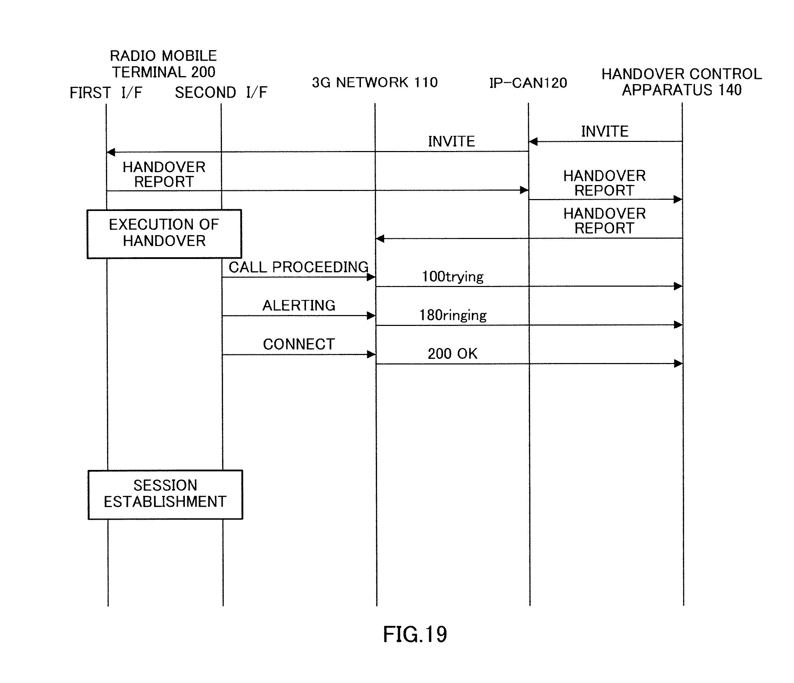

FIG.19 is a sequence diagram showing seamless handover during call reception and shows a sequence of seamless handover when seamless handover takes place during incoming call control in first radio I/F section 211.

The present embodiment will assume that the call control protocol used by first radio I/F section 211 is SIP and the call control protocol used by second radio I/F section 212 is 3GPP.

Radio mobile terminal 200 receives "INVITE" using first radio I/F section 211. In this case, the conditions to perform handover from first radio I/F section 211 to second radio I/F section 212 are met and handover is performed from first radio I/F section 211 to second radio I/F section 212.

Thus, the call control protocol of first radio I/F section 211 transmits a handover report message indicating that handover will be performed to handover control apparatus 140.

FIG.20 shows an example of the handover report message.

In FIG.20, handover report message 300 includes handover execution report 301, radio mobile terminal identifier 302 that uniquely identifies radio mobile terminal 200, session identifier 303 that uniquely identifies a session at handover control apparatus 140 and radio mobile terminal 200 and call state 304 (here "INVITE received") of the call control protocol at first radio I/F section 211 of radio mobile terminal 200.

Handover control apparatus 140 having received above-described handover report message 300 reports to 3G network 110 that radio mobile terminal 200 will perform handover. Since the call state is "INVITE received," 3G network 110 having received handover report message 300 looks up mapping table 115 of the call states of the radio mobile terminal and 3G network 110 shown FIG.11, and causes the state to transition to the "waiting to receive Call Proceeding state" from radio mobile terminal 200.

The call control protocol used by first radio I/F section 211 reports the call state (the "INVITE received" state here) to the call control protocol used by second radio I/F section 212. That is, first radio I/F section 211 reports a "call state: INVITE received" message to second radio I/F section 212.

Here, the call control protocol of second radio I/F section 212 looks up call state mapping table 230 of first radio I/F section 211 and second radio I/F section 212 shown in FIG.10 and finds "Setup received" to be mapped to "INVITE received." Thus, the call control protocol of second radio I/F section 212 decides that the call state of radio mobile terminal 200 is "Setup received," changes the state to "Setup received" and executes the subsequent processing.

In response to this, since the call control protocol of second radio I/F section 212 is "Setup received,""Call Proceeding" is transmitted using second radio I/F section 212.

On the other hand, since 3G network 110 is waiting to receive "Call Proceeding," 3G network 110 can receive "Call Proceeding" from radio mobile terminal 200.

Thus, 3G network 110 can establish a session using second radio I/F section 212.

A case has been explained so far where seamless handover takes place immediately after "INVITE" is received, but the same applies when seamless handover takes place immediately after "100 trying" or "180 ringing" is transmitted.

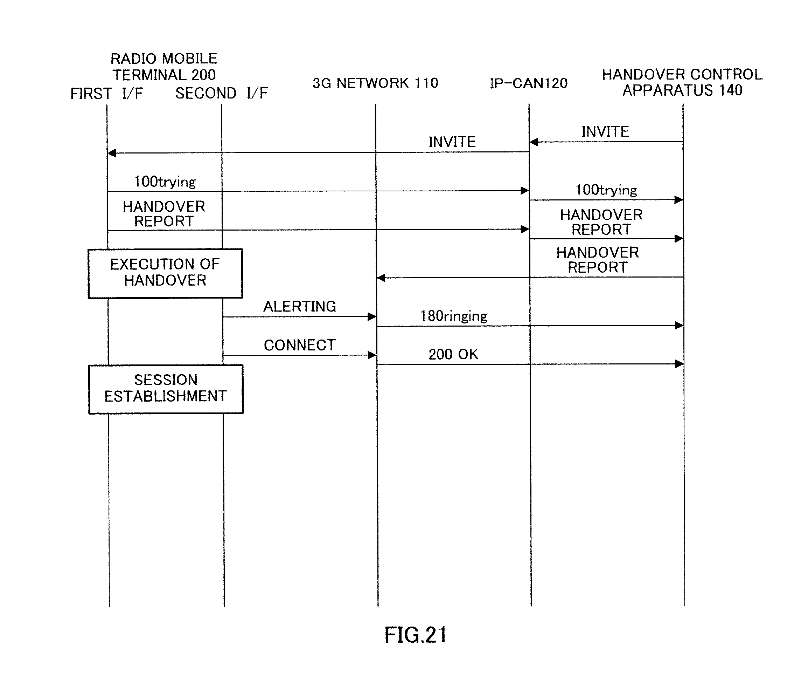

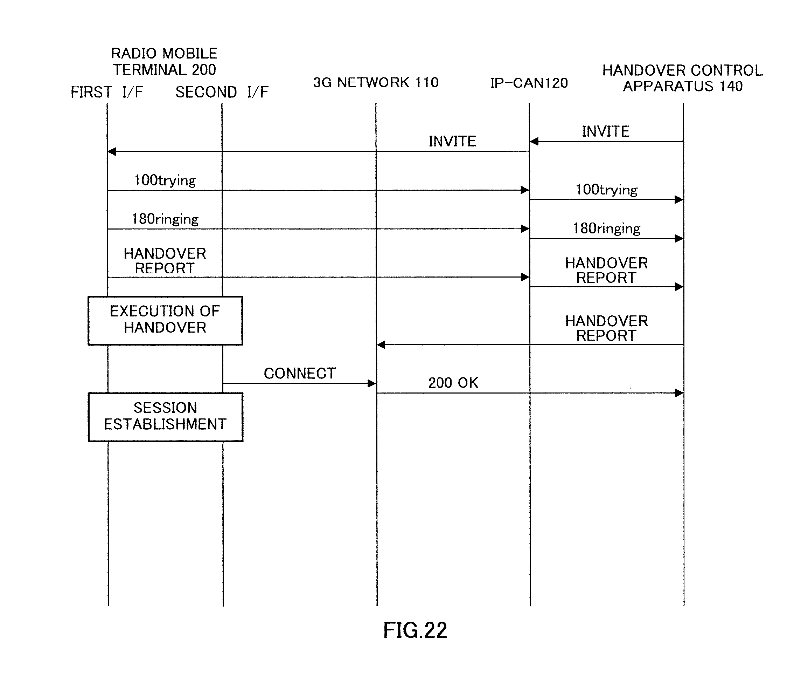

FIG.21 and FIG.22 are sequence diagrams showing seamless handover during call reception, FIG.21 is a sequence diagram when seamless handover takes place immediately after "100 trying" is transmitted and FIG.22 is a sequence diagram when seamless handover takes place immediately after "180 ringing" is transmitted.

For mapping between the call control states of first radio I/F section 211 and second radio I/F section 212, call state mapping table 230 of first radio I/F section 211 and second radio I/F section 212 shown in FIG.10 will be used. Furthermore, for mapping between the call control state of radio mobile terminal 200 and the call control state of 3G network 110, call state mapping table 115 of radio mobile terminal 200 and 3G network 110 shown in FIG.11 will be used.

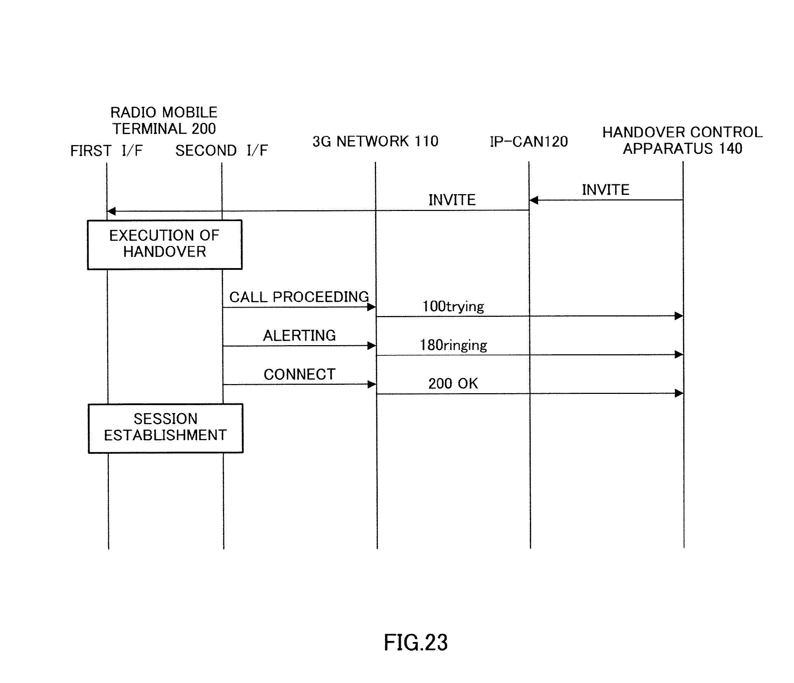

Here, when seamless handover takes place during call reception, a case where handover is not reported is also acceptable. FIG.23 shows a sequence diagram in such a case.

FIG.23 is a sequence diagram of seamless handover during call reception when handover is not reported and shows a sequence of seamless handover when seamless handover takes place during incoming call control in first radio I/F section 211.

Therefore, according to the present embodiment, the call state protocol stacks used by radio mobile terminal 200 and 3G network 110 can provide effects similar to those in Embodiments 1 and 2, that is, it is possible to perform seamless hand over between mobile communication networks adopting different call control protocols and establish or continue a session even when seamless handover takes place during call control. Furthermore, since seamless handover can be realized without waiting for a normal session to be established, the connection time can be reduced. Furthermore, it is possible to even support a case where seamless handover takes place during a call control sequence such as hold after a session is established.

### (Embodiment 4)

Embodiment 4 is an example where seamless handover takes place during incoming call control in second radio I/F section 212.

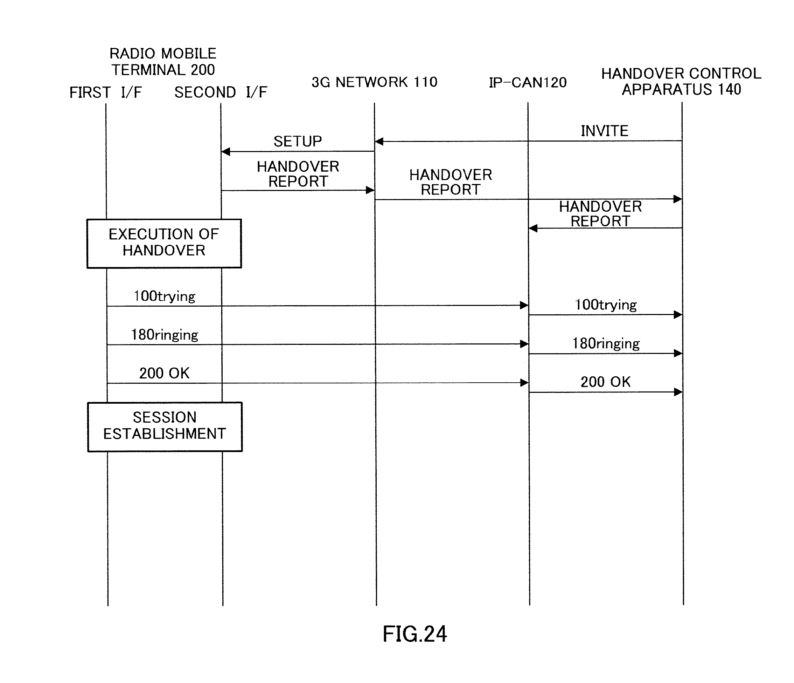

FIG.24 is a sequence diagram showing seamless handover during call reception and shows a sequence of seamless handover when seamless handover takes place during incoming call control in second radio I/F section 212.

The present embodiment will assume that the call control protocol used by first radio I/F section 211 is SIP and the call control protocol used by second radio I/F section 212 is 3GPP.

Radio mobile terminal 200 receives "Setup" using second radio I/F section 212. In this case, the conditions to perform handover from second radio I/F section 212 to first radio I/F section 211 are met and handover is performed from second radio I/F section 212 to first radio I/F section 211.

Thus, the call control protocol of second radio I/F section 212 transmits handover report message 300 (see FIG.20) indicating that handover will be performed to handover control apparatus 140. Now, "Setup received" is given to call state 304 of the call control protocol of this handover report message 300.

As described above, handover control apparatus 140 having received handover report message 300 (call state 304 "Setup received") reports to IP-CAN 120 that radio mobile terminal 200 will perform handover. Since the call state of IP-CAN 120 having received handover report message 300 is "Setup received, " IP-CAN 120 looks up call state mapping table 125 of radio mobile terminal 200 and IP-CAN 120 shown in FIG.12 and causes the state to transition to the "waiting to receive 100 trying" state from radio mobile terminal 200.

The call control protocol used by second radio I/F section 212 reports the call state (the "Setup received" state here) to the call control protocol used by first radio I/F section 211. That is, second radio I/F section 212 reports a "call state: Setup received" message to first radio I/F section 211.

Here, the call control protocol of first radio I/F section 211 looks up call state mapping table 230 of first radio I/F section 211 and second radio I/F section 212 shown in FIG.10 and finds "INVITE received" to be mapped to "Setup received." Thus, the call control protocol of first radio I/F section 211 decides that the call state of radio mobile terminal 200 is "INVITE received," changes the state to "INVITE received" and executes the subsequent processing.

In response to this, the call control protocol of first radio I/F section 211, given the "INVITE received" state, transmits "100 trying" using first radio I/F section 211.

On the other hand, since IP-CAN 120 is waiting to receive "100 trying," IP-CAN 120 can receive "100 trying" from radio mobile terminal 200.

This allows a session to be established using first radio I/F section 211.

A case has been explained so far where seamless handover takes place immediately after "Setup" is received, but the same applies when seamless handover takes place immediately after "Call Proceeding" or "Alerting" is received.

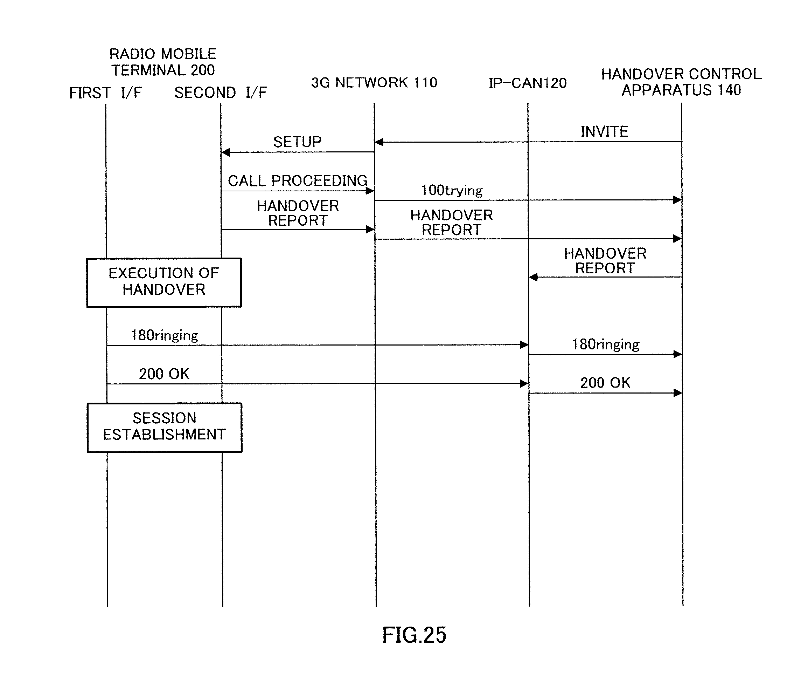

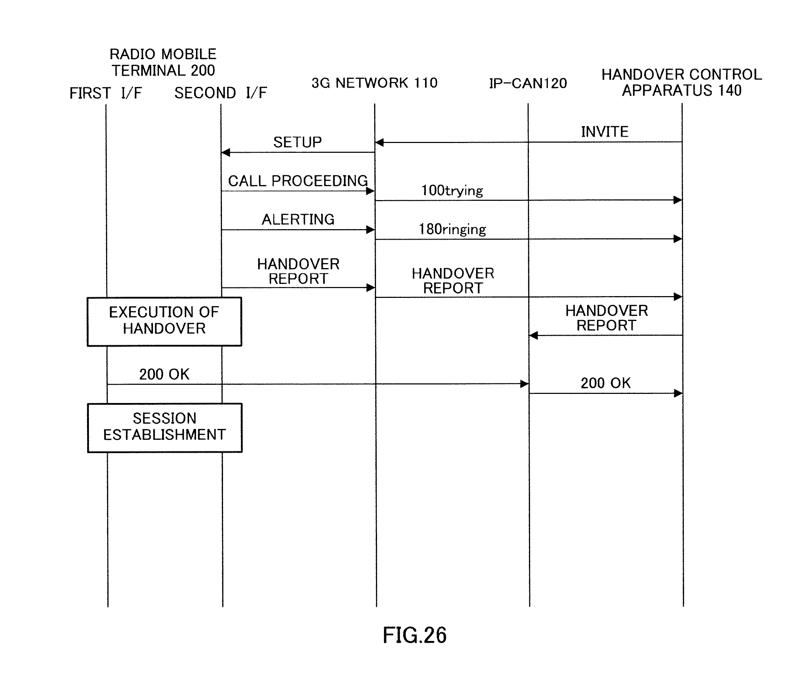

FIG.25 is a sequence diagram when seamless handover takes place immediately after "Call Proceeding" is transmitted and FIG.26 shows a sequence diagram when seamless handover takes place immediately after "Alerting" is transmitted.

For mapping between the call control states of first radio I/F section 211 and second radio I/F section 212, call state mapping table 230 of first radio I/F section 211 and second radio I/F section 212 shown in FIG.10 is used. Furthermore, for mapping between the call control state of radio mobile terminal 200 and the call control state of IP-CAN 120, call state mapping table 125 of radio mobile terminal 200 and IP-CAN 120 shown in FIG.12 is used.

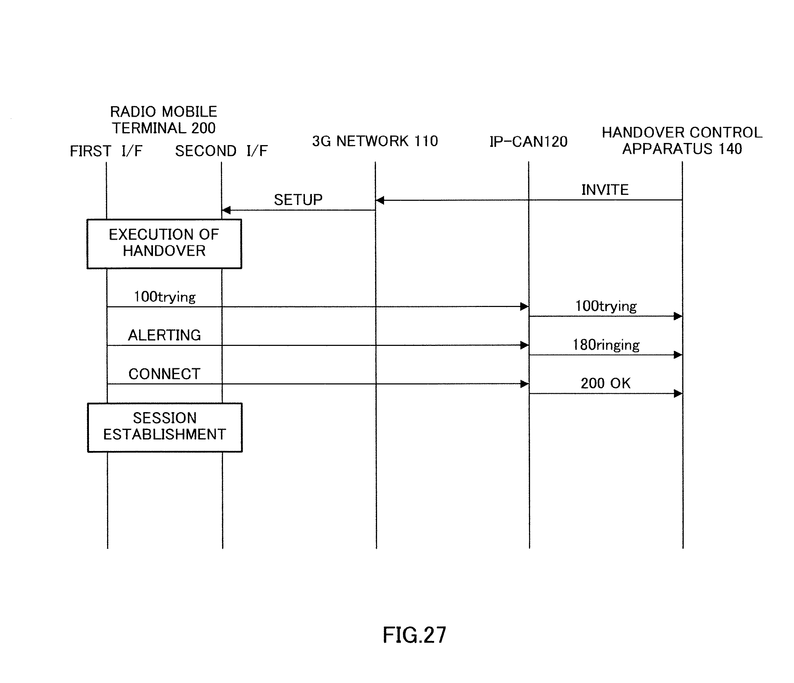

Here, when seamless handover takes place during call reception, a case where handover is not reported is also acceptable. FIG.27 shows a sequence diagram in such a case.

FIG.27 is a sequence diagram of seamless handover during call reception when handover is not reported and shows a sequence of seamless handover when seamless handover takes place during call reception by second radio I/F section 212.

Therefore, the present embodiment can provide effects similar to those of Embodiment 3 in the call state protocol stacks used by radio mobile terminal 200 and IP-CAN 120.

### (Embodiment 5)

Embodiment 5 and Embodiment 6 are examples where seamless handover takes place during hold and Embodiment 5 is an example where seamless handover takes place during pending call control in first radio I/F section 211.

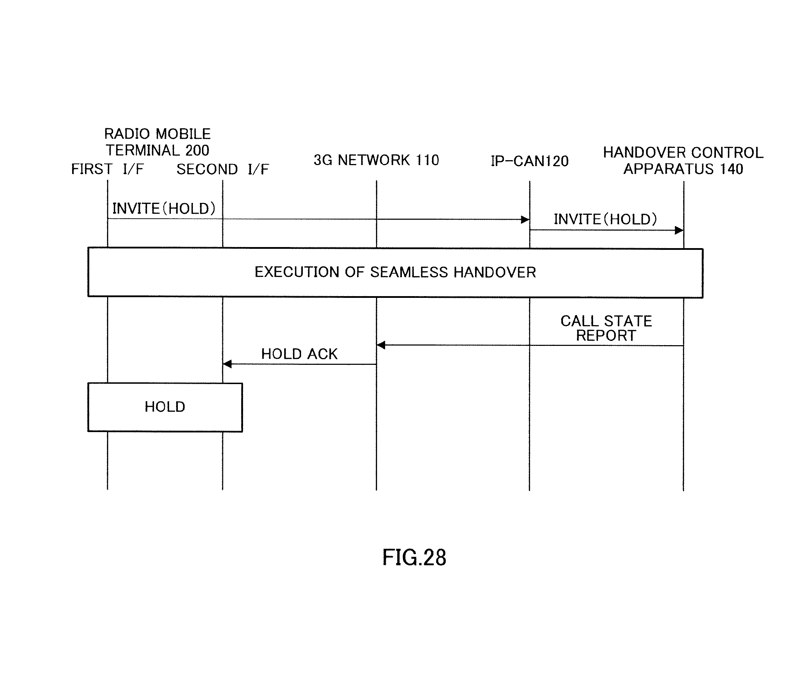

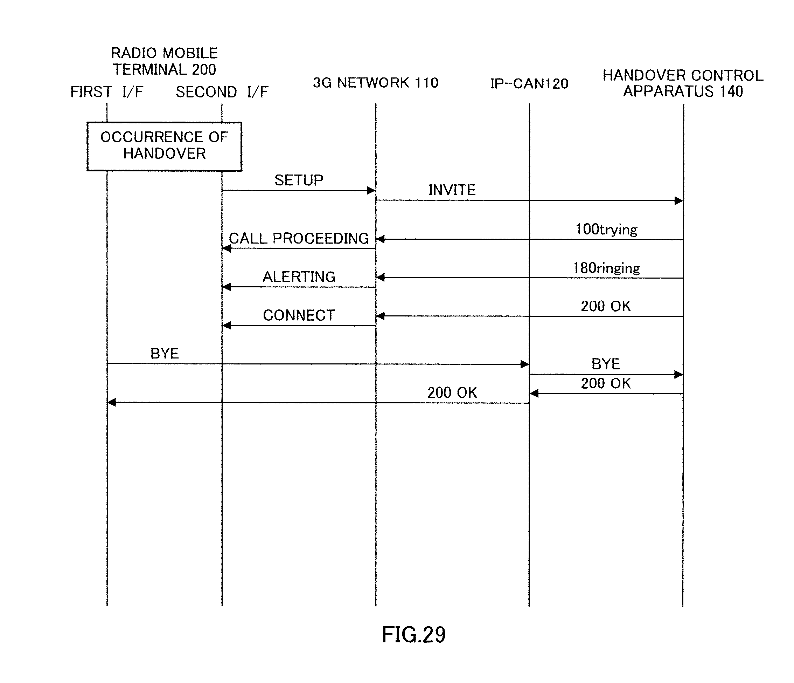

FIG.28 shows a sequence of seamless handover when seamless handover takes place during pending call control in first radio I/F section 211. FIG.29 shows details of the sequence of execution of seamless handover in FIG.28. The present embodiment assumes the call control protocol used by first radio I/F section 211 as SIP and the call control protocol used by second radio I/F section 212 as 3GPP.

Radio mobile terminal 200 has already established a session using first radio I/F section 211 and executes call control to hold a call. The present embodiment transmits "INVITE" (hold) to request for hold, using first radio I/F section 211. In this case, IP-CAN 120 having received "INVITE" (hold) reports "INVITE" (hold) to handover control apparatus 140.

Then, the conditions to perform handover from first radio I/F section 211 to second radio I/F section 212 are met in radio mobile terminal 200, and handover is performed from first radio I/F section 211 to second radio I/F section 212. This seamless handover is performed under, for example, the scheme according to Non-Patent Document 1.

After the execution of seamless handover, since the handover control apparatus has received "INVITE" (hold) from the radio mobile terminal, the handover control apparatus transmits the call state "INVITE (hold) transmitted" to 3G network 110 using a call state report message in a similar format to the handover report message shown in FIG.20.

3G network 110 having received the call state report message looks up call state mapping table 115 of radio mobile terminal 200 and 3G network 110 shown in FIG.11 transitions to the "Hold received" state mapped to the "INVITE (hold) transmitted" state. Thus, 3G network 110 transmits "Hold Ack" to radio mobile terminal 200, which completes the hold sequence.

A case has been explained so far where seamless handover takes place immediately after "INVITE" is transmitted (hold), but the same applies when seamless handover takes place immediately after "200 OK" (hold) or transmitting "Ack" (hold) is transmitted. For mapping between the call control state of radio mobile terminal 200 and the call control state of 3G network 110, call state mapping table 115 of radio mobile terminal 200 and 3G network 110 shown in FIG.11 is used.

### (Embodiment 6)

Embodiment 6 is an example where seamless handover takes place during pending call control in second radio I/F section 212.

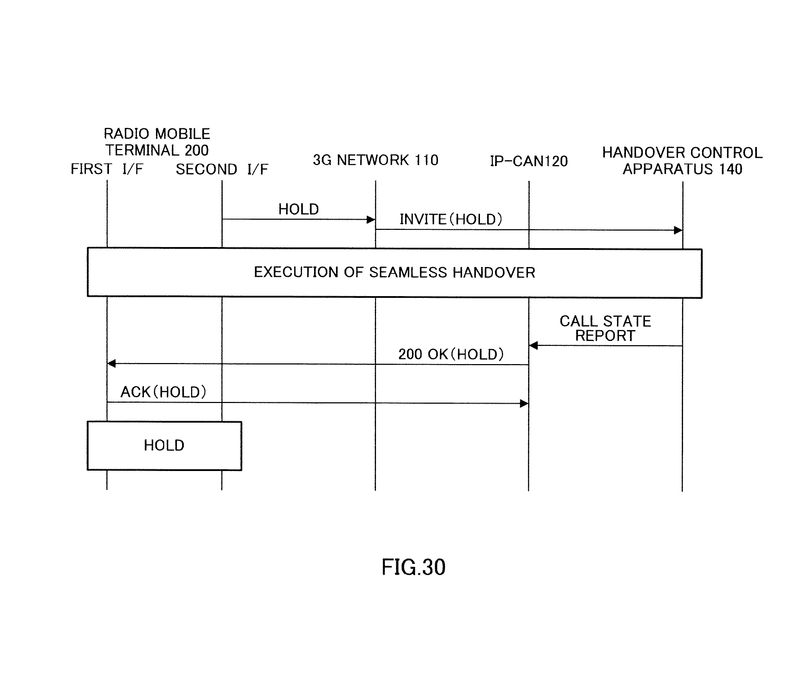

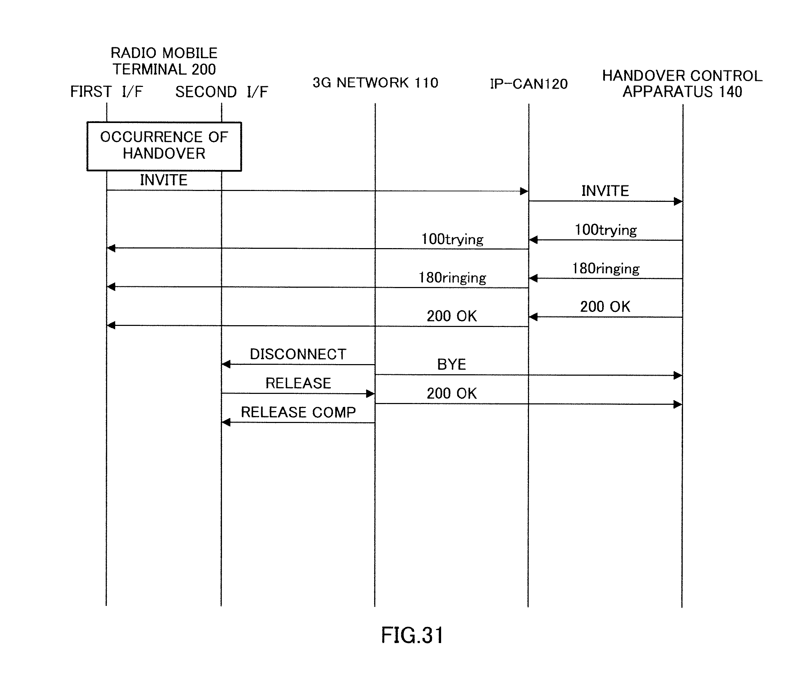

FIG. 30 shows a sequence of seamless handover when seamless handover takes place during pending call control in second radio I/F section 212. FIG. 31 shows the details of the sequence of execution of seamless handover in FIG. 30. The present embodiment will assume that the call control protocol used by first radio I/F section 211 is SIP and the call control protocol used by second radio I/F section 212 is 3GPP.

Since radio mobile terminal 200 has already established a session using second radio I/F section 212, radio mobile terminal 200 performs call control to hold a call. The present embodiment transmits "Hold" to request hold using second radio I/F section 212. In this case, the 3G network having received "Hold" reports "INVITE" (hold) to the handover control apparatus.

Then, the conditions to perform handover from second radio I/F section 212 to first radio I/F section 211 are met in radio mobile terminal 200, and handover is performed from second radio I/F section 212 to first radio I/F section 211. This seamless handover is performed under, for example, the scheme according to Non-Patent Document 1.

After the execution of seamless handover, since handover control apparatus 140 has received "INVITE" (hold) from radio mobile terminal 200, handover control apparatus 140 transmits the call state "INVITE (hold) transmitted" to IP-CAN 120 using a call state report message in a similar format to the handover report message shown in FIG.20.

IP-CAN 120 having received the call state report message looks up call state mapping table 115 of radio mobile terminal 200 and 3G network 110 shown in FIG.11 and transits to the "INVITE (hold) transmitted" state mapped to the "INVITE (hold) transmission" state. Thus, IP-CAN 120 transmits 200 "OK" (hold) to radio mobile terminal 200, radio mobile terminal 200 receives "200 OK" (hold) and transmits "Ack" (hold), which completes the hold sequence.

The explanations so far are illustrations of preferred embodiments of the present invention, but the scope of the present invention is by no means limited to this. For example, although a case has been explained above with the present embodiment assuming that the call control protocol used by first radio I/F section 211 is SIP and the call control protocol used by second radio I/F section 212 is 3GPP, the essential requirement is only that seamless handover is performed between radio mobile communication networks adopting different call control protocols, and the present invention is not limited to WLAN/SIP or 3GPP.

Furthermore, the present embodiment has used terms such as "communication terminal apparatus," "communication system" and "seamless handover method," but these are for convenience of explanation and it goes without saying that "radio mobile terminal," "network system," "handover method" and others may be used as well.

Moreover, there are no restrictions on the type, the number and connection method and so on for the parts making up the communication terminal apparatus, network and communication system such as the radio interface section of the radio mobile terminal. Furthermore, data, type and method of mapping of the call state mapping table are not limited to those in FIG.10 to FIG.12.

The seamless handover method explained so far can also be implemented by a program for causing this seamless handover method to function. This program may be stored in a computer-readable recording medium.

### Industrial Applicability

The communication terminal apparatus, communication system and seamless handover method according to the present invention can realize seamless handover between IP subnets and so on in WLAN and are applicable to a system made up of different types of networks such as a 3G network and WLAN network.

## Claims

1. A communication terminal apparatus comprising a first radio interface and a second radio interface for carrying out communication using different call control protocol stacks between the first and second radio interfaces,
wherein, when handover is performed from the first radio interface to the second radio interface while call control using the first radio interface is in progress, a call state in a call control protocol stack being executed using the first radio interface is maintained by a call control protocol stack to be executed using the second radio interface.

2. A communication terminal apparatus comprising a first radio interface and a second radio interface for carrying out communication using different call control protocol stacks between the first and second radio interfaces, wherein:
while call control using the first radio interface is in progress, even if the conditions to perform handover from the first radio interface to the second radio interface are met, handover is not performed; and
handover is performed from the first radio interface to the second radio interface after the call control using the first interface is finished.

3. The communication terminal apparatus according to claim 1, further comprising a call state mapping table that maps a message in a call state protocol stack of the first radio interface and a message in a call state protocol stack of the second radio interface,
wherein, when the call control protocol used by the first radio interface reports a predetermined message to the call control protocol used by the second radio interface, the call control protocol of the second radio interface looks up the call state mapping table, finds another predetermined message mapped by the predetermined message, changes the state to the another predetermined message and performs subsequent processing.

4. The communication terminal apparatus according to claim 1, wherein the call state in the call control protocol stack corresponds to a case where handover takes place immediately after an INVITE is transmitted, a 100 trying is received or a 180 ringing is received.

5. The communication terminal apparatus according to claim 1, wherein the call state in the call control protocol stack corresponds to a case where handover takes place immediately after an INVITE is received, a 100 trying is transmitted or a 180 ringing is transmitted.

6. The communication terminal apparatus according to claim 1, wherein the call state in the call control protocol stack corresponds to a case where handover takes place immediately after a setup is transmitted, a call proceeding is received or an alerting is received.

7. The communication terminal apparatus according to claim 1, wherein the call state in the call control protocol stack corresponds to a case where handover takes place immediately after a setup is received, a call proceeding is transmitted or an alerting is transmitted.

8. The communication terminal apparatus according to claim 1, wherein the call control protocol stack comprises a session initiation protocol or a third generation partnership project.

9. A communication system comprising a plurality of different networks and a communication terminal apparatus comprising radio interfaces for carrying out communication with the plurality of networks, the communication terminal apparatus starting the radio interfaces to perform call control, the communication system comprising:
a call state mapping table that performs mapping by associating a message in a call state protocol stack of the communication terminal apparatus with a message in a call state protocol stack used in a certain network among the plurality of networks; and
a call control section that looks up the call state mapping table, finds another predetermined message mapped by the predetermined message, changes the state to the another predetermined message and executes subsequent processing.

10. A method of seamless handover from a first radio interface and a second radio interface for a communication terminal apparatus comprising the first radio interface and the second radio interface for carrying out communication using different call control protocol stacks between the first and second radio interfaces,
wherein, when handover is performed from the first radio interface to the second radio interface while call control using the first radio interface is in progress, a call state in a call control protocol stack being executed using the first radio interface is maintained by a call control protocol stack to be executed using the second radio interface.

11. A method of seamless handover from a first radio interface and a second radio interface for a communication terminal apparatus comprising the first radio interface and the second radio interface for carrying out communication using different call control protocol stacks between the first and second radio interfaces,
wherein, while call control using the first radio interface is in progress, even if the conditions to perform handover from the first radio interface to the second radio interface are met, handover is not performed, and handover is performed from the first radio interface to the second radio interface after the call control using the first interface is finished.

12. The seamless handover method according to claim 10,
wherein:
setting beforehand a call state mapping table that maps a message in a call state protocol stack of the first radio interface to a message in a call state protocol stack of the second radio interface; and
when the call control protocol used by the first radio interface reports a predetermined message to the call control protocol used by the second radio interface, the call control protocol of the second radio interface looks up the call state mapping table, finds another predetermined message mapped by the predetermined message, changes the state to the another predetermined message and performs subsequent processing.

13. The seamless handover method according to claim 10,
wherein the call state in the call control protocol stack corresponds to a case where handover takes place immediately after an INVITE is transmitted, a 100 trying is received or a 180 ringing is finished.
